# EUROPÄISCHE PATENTSCHRIFT

(11) **EP 0 898 542 B1**
(45) Veröffentlichungstag und Bekanntmachung des Hinweises auf die Patenterteilung: **19.04.2000**
(21) Anmeldenummer: 97923896.1
(22) Anmeldetag: 14.05.1997
(51) Int. Cl.: B62M 3/00, B62K 19/16

(54) **FAHRRADKURBEL**
BICYCLE CRANK
MANIVELLE DE PEDALIER POUR BICYCLETTE

(30) Priorität: 14.05.1996 DE 29608748 U
(43) Veröffentlichungstag der Anmeldung: 03.03.1999
(73) Patentinhaber: Storck, Markus, 65520 Bad Camberg (DE); Mertin, Thomas, 24791 Alt Duvenstedt (DE)
(72) Erfinder: Storck, Markus, 65520 Bad Camberg (DE); Mertin, Thomas, 24791 Alt Duvenstedt (DE)
(74) Vertreter: Wallinger, Michael, Dr.-Ing.
(86) Internationale Anmeldenummer: EP9702470
(87) Internationale Veröffentlichungsnummer: WO9743167

(56) Entgegenhaltungen:
- EP-A- 0 352 663
- DE-U- 29 600 548
- DE-U- 29 608 748
- FR-A- 2 636 386
- US-A- 3 833 242
- US-A- 4 811 626

## Beschreibung

Die vorliegende Erfindung betrifft eine Fahrradkurbel.

Im Stand der Technik sind Fahrradkurbeln bekannt, die aus einem Aluminiumlegierung-Gußteil bestehen, wobei an den Enden des Aluminiumlegierung-Gußteils einerseits eine Befestigungseinrichtung zum Einschrauben eines Pedals und andererseits eine Befestigungseinrichtung zur Anbringung an die Tretlagerwelle vorgesehen sind. Auch ist es bekannt, an einer derartigen Fahrradkurbel einen oder mehrere Zahnkränze zu befestigen.

Als nachteilig bei den bekannten Fahrradkurbeln hat sich erwiesen, daß die Fahradkurbel ein hohes Gewicht aufweist, Probleme bezüglich der Festigkeit mit sich bringen kann und in ihrer Form nicht auf einfache Weise an unterschiedliche optische und technische Anforderungen angepaßt werden kann.

Aus der FR-A-2636386 ist eine Fahrradkurbel aus einem Verbundwerkstoff bekannt. An den beiden Enden sind Einsätze angeordnet, deren einer zur Befestigung der Pedale an der Tretkurbel dient, während der andere zur Befestigung der Tretkurbel am Tretlager verwendet wird. Jeder dieser Einsätze weist zwei nach außen geöffnete hohlkehlenartige Flansche auf. Zur Herstellung der Tretkurbel werden die Einsätze in genau definiertem Abstand angeordnet und mit kunstharzgetränkten Fasern umwickelt, wodurch eine Reduktion des Gewichtes der Tretkurbel erreicht wird. Nachteilig ist jedoch, daß nur gerade Tretkurbeln hergestellt werden können und daß die verwendeten Einsätze mit den hohlkehlenartigen Flanschen nur aufwendig hergestellt werden können.

Dementsprechend ist es Aufgabe der vorliegenden Erfindung, eine Fahrradkurbel und ein Verfahren zu deren Herstellung zu schaffen, welche ein geringes Gewicht aufweist und in ihrer Form vielseitig gestaltbar ist, ohne den Kostenaufwand zu erhöhen.

Diese Aufgabe wird erfindungsgemäß durch die Fahrradkurbel nach Anspruch 1 und durch das Verfahren nach Anspruch 25 gelöst.

Bevorzugte Weiterbildungen der Erfindung sind Gegenstand der Unteransprüche.

Als besonders vorteilhaft bei der erfindungsgemäßen Fahrradkurbel hat sich herausgestellt, daß sie ein geringes Gewicht aufweist und mit geringem apparativem Aufwand in den verschiedensten Formen hergestellt werden kann.

Die Dichte des kohlefaserverstärkten Kunststoffes beträgt nur ca. 1550 kg/m³, während die von Aluminium ca.2700 kg/ m³ beträgt. Die Dichte der Hartschaummasse ist noch geringer. Daraus resultierend wird das Gewicht der Fahrradkurbel drastisch reduziert.

Die hohe Festigkeit des kohlefaserverstärkten Kunststoffes ermöglicht es, daß die erfindungsgemäße Fahrradkurbel annähernd die gleiche Belastbarkeit wie das herkömmliche Aluminiumlegierung-Gußteil aufweist. Dies wurde durch entsprechende Lastwechsel-Versuche eindeutig bestätigt.

Die erfindungsgemäße Fahrradkurbel ist einfach herzustellen und wirkt insbesondere dann ansprechend im Design, wenn ein durchsichtiger Kunststoff verwendet wird, der die Verflechtung des Fasergewebes von außen erkennbar macht.

Die Erfindung wird nachstehend anhand bevorzugter Ausführungsbeispiele näher beschrieben.

In der Zeichnung zeigen:
- Fig. 1: eine Draufsicht auf eine Fahrradkurbel gemäß einer ersten bevorzugten Ausführungsform der vorliegenden Erfindung;
- Fig. 2: eine Seitenansicht einer Fahrradkurbel gemäß der ersten bevorzugten Ausführungsform der vorliegenden Erfindung;
- Fig. 3: eine Querschnittsansicht entlang der Linie A-A' in Fig. 2 der Fahrradkurbel gemäß der ersten bevorzugten Ausführungsform der vorliegenden Erfindung;
- Fig. 4: eine weitere Querschnittsansicht entlang der Linie B-B' in Fig. 2 der Fahrradkurbel gemäß der ersten bevorzugten Ausführungsform der vorliegenden Erfindung;
- Fig. 5: eine Draufsicht auf eine Fahrradkurbel gemäß der zweiten bevorzugten Ausführungsform der vorliegenden Erfindung;
- Fig. 6: eine vergrößerte teilweise Seitenansicht einer Fahrradkurbel gemäß der zweiten bevorzugten Ausführungsform der vorliegenden Erfindung;
- Fig. 7: eine Querschnittsansicht einer bevorzugten Ausführungsform der Tretlagerwellenbefestigungseinrichtung für die erfindungsgemäße Fahrradkurbel;
- Fig. 8: eine Draufsicht auf die bevorzugte Ausführungsform der Tretlagerwellenbefestigungseinrichtung für die erfindungsgemäße Fahrradkurbel;
- Fig. 9: eine Querschnittsansicht einer bevorzugten Ausführungsform der Pedalbefestigungseinrichtung für die erfindungsgemäße Fahrradkurbel;
- Fig. 10: eine Draufsicht auf die bevorzugte Ausführungsform der Pedalbefestigungseinrichtung für die erfindungsgemäße Fahrradkurbel;
- Fig. 11: eine Querschnittsansicht einer bevorzugten Ausführungsform eines in den aus Hartschaummasse bestehenden Kern eingeschäumten Innengewindeeinsatzes als Teil der Zahnkranzbefestigungseinrichtung für die erfindungsgemäße Fahrradkurbel; und
- Fig. 12: eine Draufsicht auf die bevorzugte Ausführungsform eines in den aus Hartschaummasse bestehenden Kern eingeschäumten Teils Innengewindeeinsatzes als Teil der Zahnkranzbefestigungseinrichtung für die erfindungsgemäße Fahrradkurbel.

In den Figuren bezeichnen gleiche Bezugszeichen gleiche Elemente, und eine wiederholte Beschreibung der selben wird daher unterlassen.

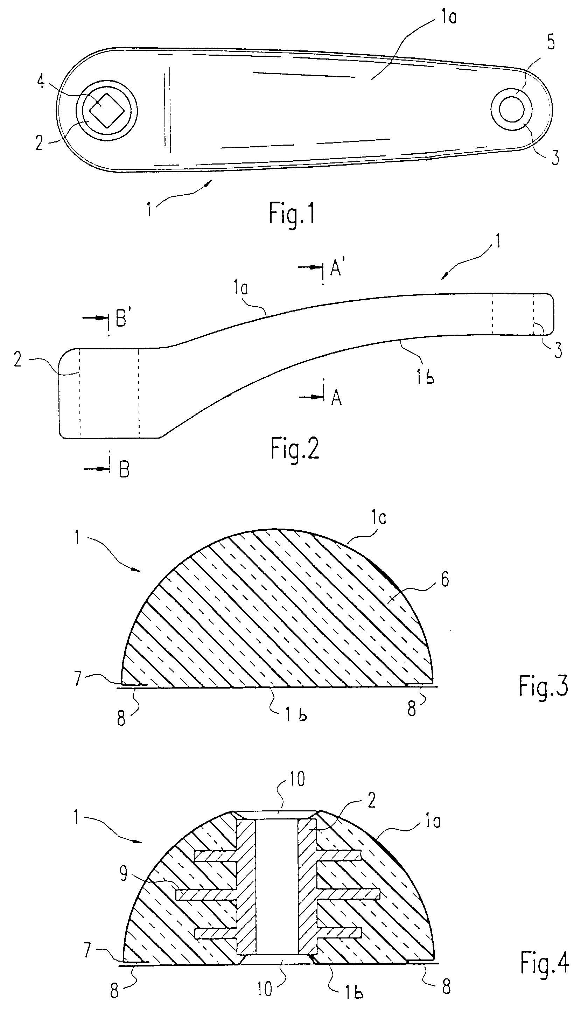

Fig. 1 ist eine Draufsicht auf eine Fahrrad kurbel gemäß einer ersten bevorzugten Ausführungsform der vorliegenden Erfindung.

In Fig. 1 bezeichnet 1 eine Fahrradkurbel mit einem faserverstärkten Kunststoffmantel. Die Oberseite 1a des faserverstärkten Kunststoffmantels weist an jedem Ende eine Öffnung auf, welche jeweils eine Tretlagerwellenbefestigungseinrichtung 2 und eine Pedalbefestigungseinrichtung 3, die beide im Kern der Fahrradkurbel 1 eingeschäumt sind , zugänglich machen.

Vorzugsweise ist die Tretlagerwellenbefestigungseinrichtung 2 ein aus einem Leichtmetall, insbesondere einer Aluminiumlegierung bestehender im wesentlichen zylindrischer Einsatz, der eine Vierkantaufnahmeeinrichtung 4 umfaßt. Vorzugsweise ist die Pedalbefestigungseinrichtung 3 ebenfalls ein aus einem Leichtmetall, insbesondere einer Aluminiumlegierung bestehender im wesentlichen zylindrischer Einsatz, der eine Innengewindeeinrichtung 5 umfaßt.

Fig. 2 ist eine Seitenansicht einer Fahrradkurbel gemäß der ersten bevorzugten Ausführungsform der vorliegenden Erfindung.

In Fig. 2 bezeichnet 1b die Unterseite des faserverstärkten Kunststoffmantels der erfindungsgemäßen Fahrradkurbel 1. Durch gestrichelte Linien in Fig. 2 schematisch angedeutet ist jeweils die Lage der Tretlagerwellenbefestigungseinrichtung 2 und der Pedalbefestigungseinrichtung 3.

Die Unterseite 1b des faserverstärkten Kunststoffmantels weist zwei der Oberseite 1a entsprechende Öffnungen auf, welche jeweils die Tretlagerwellenbefestigungseinrichtung 2 und die Pedalbefestigungseinrichtung 3, die im Kern der Fahrradkurbel eingeschäumt sind , zugänglich machen.

Es sei jedoch bemerkt, daß prinzipiell für die Tretlagerwellenbefestigungseinrichtung 2 eine Öffnung des faserverstärkten Kunststoffmantels auf der Unterseite 1b und für die Pedalbefestigungseinrichtung eine Öffnung des faserverstärkten Kunststoffmantels auf der Oberseite 1a ausreichen würde.

Fig. 3 ist eine Querschnittsansicht entlang der Linie A-A' in Fig. 2 der Fahrradkurbel gemäß der ersten bevorzugten Ausführungsform der vorliegenden Erfindung.

Der Kern 6 der Fahrradkurbel 1 besteht aus einer Hartschaummasse, in die die Tretlagerwellenbefestigungseinrichtung 2 und die Pedalbefestigungseinrichtung 3 eingeschäumt sind. Die Hartschaummasse dient somit zum Fixieren der Tretlagerwellenbefestigungseinrichtung 2 und der Pedalbefestigungseinrichtung 3 und zum Erhöhen der Steifigkeit der gesamten Fahrradkurbel 1. Die Hartschaummasse besteht vorzugsweise aus Polyurethanschaum.

Wie ebenfalls aus Fig. 3 ersichtlich, besteht die Oberseite 1a des faserverstärkten Kunststoffmantels vorzugsweise aus einem wannenförmigen Teil, während die Unterseite 1 b des faserverstärkten Kunststoffmantels vorzugsweise aus einem damit verbundenen flachen deckelförmigen Teil besteht. Beide Teile sind durch den Kunststoff fest miteinander verbunden.

Zweckmäßigerweise weist der deckelförmige Teil eine Überlappkante 7 auf und ist der wannenförmige Teil im Verbindungsbereich 8 nach innen umgeschlagen. Dies erhöht zusätzlich die Stabilität der Fahrradkurbel 1 und erlaubt eine ansprechende optische Gestaltung.

Allgemein kann der faserverstärkte Kunststoffmantel auch aus mehreren Fasergewebelagen bestehen. Der verwendete Kunststoff ist dabei vorzugsweise durchsichtig, um die Verflechtung des Fasergewebes nach außen hin sichtbar zu machen und so für ein interessantes optisches Äußeres zu sorgen.

Fig. 4 ist eine weitere Querschnittsansicht entlang der Linie B-B' in Fig. 2 der Fahrradkurbel gemäß der ersten bevorzugten Ausführungsform der vorliegenden Erfindung.

Die in Fig. 4 gezeigte Querschnittsansicht zeigt den Bereich der Tretlagerwellenbefestigungseinrichtung 2. Es sei jedoch bemerkt, daß der entsprechende Bereich der Pedalbefestigungseinrichtung 3 analog aufgebaut ist.

Die Tretlagerwellenbefestigungseinrichtung 2 ist, wie oben erwähnt, vorzugsweise ein im wesentlichen zylindrischer Einsatz. An den Zylinderumfang sind scheibenförmige Lamellen 9 angesetzt sind. Diese Lamellen 9 dienen zur Erhöhung der Sitzfestigkeit der in der Hartschaummasse eingeschäumten Tretlagerwellenbefestigungseinrichtung 2, denn sie erhöhen die Oberfläche, die in Verbindung mit der Hartschaummasse steht. Insbesondere verhindert somit die sich zwischen den Lamellen 9 befindliche Hartschaummasse ein Verdrehen und Verrutschen der Tretlagerwellenbefestigungseinrichtung 2.

Es sei bemerkt, daß weiterer Kunststoff, z.B. der für den faserverstärkten Kunststoffmantel verwendete Kunststoff, neben der Hartschaummasse insbesondere im Bereich des Einsatzes der Tretlagerwellenbefestigungseinrichtung 2 vorgesehen sein kann, um die Sitzfestigkeit weiter zu erhöhen.

Weiterhin ist in Fig. 4 erkennbar, daß in den faserverstärkten Kunststoffmantel im Bereich der Tretlagerwellenbefestigungseinrichtung 2 sowohl auf der Oberseite 1a als auch auf der Unterseite 1b eine Zugangsöffnung 10 konisch eingesenkt ist.

Die in Figuren 1 bis 4 dargestellte erste bevorzugte Ausführungform der erfindungsgemäßen Fahrradkurbel 1 ist beispielsweise für die dem Kettenantrieb gegenüberliegende Seite des Tretkurbelsatzes bestimmt.

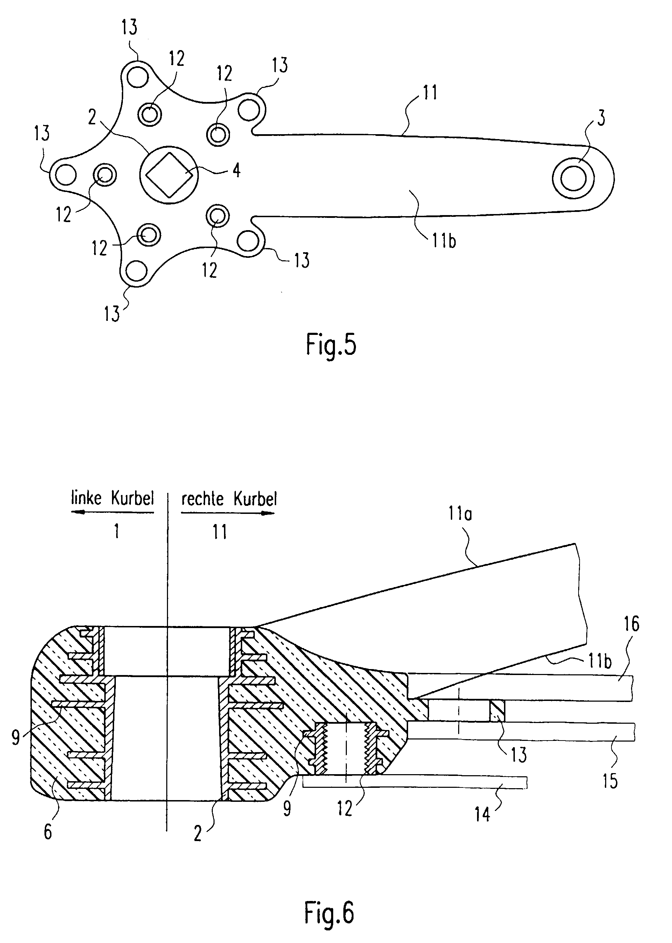

In Figuren 5 und 6 ist eine zweite bevorzugte Ausführungsform der erfindungsgemäßen Fahrradkurbel dargestellt, die vorteilhafterweise für die Seite des Kettenantriebs des Tretkurbelsatzes bestimmt ist.

Fig. 5 ist eine Draufsicht auf eine Fahrradkurbel gemäß der zweiten bevorzugten Ausführungsform der vorliegenden Erfindung.

Die zweite bevorzugte Ausführungsform unterscheidet sich von der ersten bevorzugten Ausführungsform in der Ausgestaltung des Bereichs der Tretlagerwellenbefestigungseinrichtung 2, da dort zusätzlich eine Zahnkranzbefestigungseinrichtung vorgesehen ist. Hingegen sind der Übergangsbereich und der Bereich der Pedalbefestigungseinrichtung 3 bei beiden Ausführungsformen im wesentlichen identisch.

In Fig. 5 bezeichnet 11 eine Fahrradkurbel mit einem faserverstärkten Kunststoffmantel. Die Unterseite 11b des faserverstärkten Kunststoffmantels weist genauso wie die erste Ausführungsform an jedem Ende eine Öffnung auf, welche jeweils eine Tretlagerwellenbefestigungseinrichtung 2 und eine Pedalbefestigungseinrichtung 3, die im aus der Hartschaummasse bestehenden Kern der Fahrradkurbel 11 eingeschäumt sind , zugänglich machen.

Zusätzlich weist diese zweite Ausführungsform der Fahrradkurbel 10 eine Zahnkranzbefestigungseinrichtung auf, welche aus zwei Teilen besteht.

Ein erster Teil 12 der Zahnkranzbefestigungseinrichtung enthält fünf in den Kern eingeschäumte, durch den faserverstärkten Kunststoffmantel zugängliche Zahnkranzgewindeeinsätze aus Aluminium, die analog wie Pedalbefestigungseinrichtung 3 aufgebaut sind, allerdings im gezeigten Beispiel nur von der Unterseite 11b der Fahrradkurbel 11 zugänglich sind. An diesen Zahnkranzgewindeeinsätzen ist vorzugsweise der kleine Zahnkranz mit dem geringsten Durchmesser befestigt.

Der zweite Teil 13 enthält fünf ringförmige Ansätze aus Kunststoff, die peripherisch um das an der Tretlagerwelle befestigte Ende der Fahrradkurbel 10 herum angeordnet sind. An diesen ringförmigen Ansätzen sind beispielsweise der große und mittlere Zahnkranz (vgl. Fig. 6) befestigt.

Fig. 6 ist eine vergrößerte teilweise Seitenansicht einer Fahrradkurbel gemäß der zweiten bevorzugten Ausführungsform der vorliegenden Erfindung.

In Fig. 6 ist der Bereich der Tretkurbelbefestigungseinrichtung 2 und der Zahnkranzbefestigungseinrichtung 12, 13 vergrößert dargestellt. Die Bezugszeichen 14, 15 und 16 bezeichnen einen jeweils nur ansatzweise schematisch dargestellten kleinen, mittleren und großen Zahnkranz.

Die entsprechende Form der Fahrradkurbel 1 auf der dem Kettenantrieb gegenüberliegenden Seite gemäß der obigen ersten Ausführungsform ist links der senkrechten Mittellinie dargestellt, wohingegen rechts der senkrechten Mittellinie die oben im Zusammenhang mit Fig. 5 erwähnten Merkmale der Zahnkranzbefestigungseinrichtung 12, 13 detailliert erkennbar sind.

Im folgenden werden die eingeschäumte Tretlagerwellenbefestigungseinrichtung, die eingeschäumte Pedalbefestigungseinrichtung und der eingeschäumte Teil der Zahnkranzbefestigungseinrichtung näher erläutert.

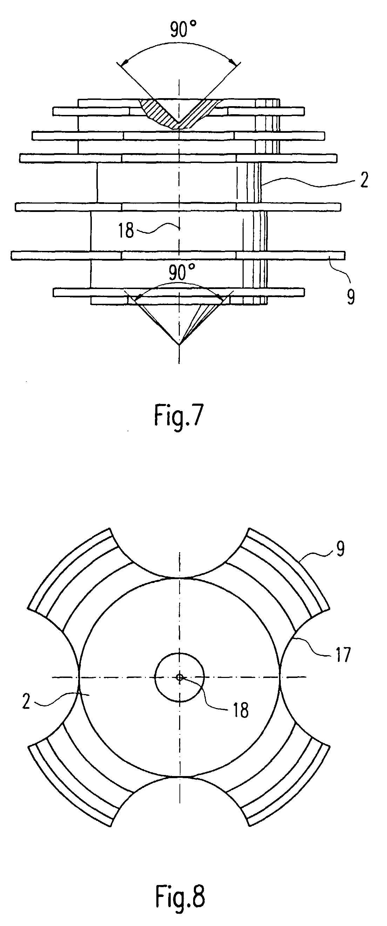

Fig. 7 ist eine Querschnittsansicht einer bevorzugten Ausführungsform der Tretlagerwellenbefestigungseinrichtung für die erfindungsgemäße Fahrradkurbel, welche sowohl bei der ersten als auch bei der zweiten Ausführungsform verwendet werden kann.

Wie in Fig. 7 dargestellt, weist die im wesentlichen zylindrische Tretlagerwellenbefestigungseinrichtung 2 umfangsmäßig die scheibenförmigen Lamellen 9 auf. Diese scheibenförmigen Lamellen dienen der Stabilisierung innerhalb des Kerns der Fahrradkurbel.

Die scheibenförmigen Lamellen 9 haben vorzugsweise unterschiedliche Durchmesser. Ebenso haben die Zylinderbereiche zwischen den Lamellen 9 vorzugsweise unterschiedliche Durchmesser. So ist es möglich, die Stabilität der Einsätze für den Einzelfall genau zu optimieren.

An beiden Enden der Tretlagerwellenbefestigungseinrichtung 2 sind vorzugsweise konische Einsenkungen mit einem Öffnungswinkel von beispielsweise 90° vorgesehen, die Anbringung an der Tretlagerwelle zu vereinfachen.

Fig. 8 ist eine Draufsicht auf die bevorzugte Ausführungsform der Tretlagerwellenbefestigungseinrichtung für die erfindungsgemäße Fahrradkurbel.

Aus Fig. 8 wird eine weitere Besonderheit der Tretlagerwellenbefestigungseinrichtung 2 deutlich. Die Lamellen 9 weisen nämlich umfangsmäßig Aussparungen 17 auf. Diese Aussparungen 17 sorgen für eine verbesserte Stabilisierung gegenüber Drehungen der Tretlagerwellenbefestigungseinrichtung 2 um die Zylinderlängsachse 18, denn gerade um diese Achse treten im Betrieb erhebliche Drehmomente auf.

Im gezeigten Beispiel sind die Aussparungen 17 halbkreisförmig und berühren den jeweiligen Zylinderbereich tangential. Diese Art von Aussparungen ist leicht herstellbar, z.B. durch Einfräsen, und bietet eine hervorragende Stabilität.

Vorzugsweise sind vier Aussparungen 17 vorgesehen, die um 90° voneinander beabstandet sind. Weiterhin ist es möglich, daß die Aussparungen 17 der verschiedenen Lamellen 9 winkelmäßig gegeneinander versetzt liegen.

Die genaue Art, Anzahl und Lage der Aussparungen ist von den konkreten Stabilitätsanforderungen des Einzelfalls abhängig und läßt sich in vielerlei Art und Weise modifizieren.

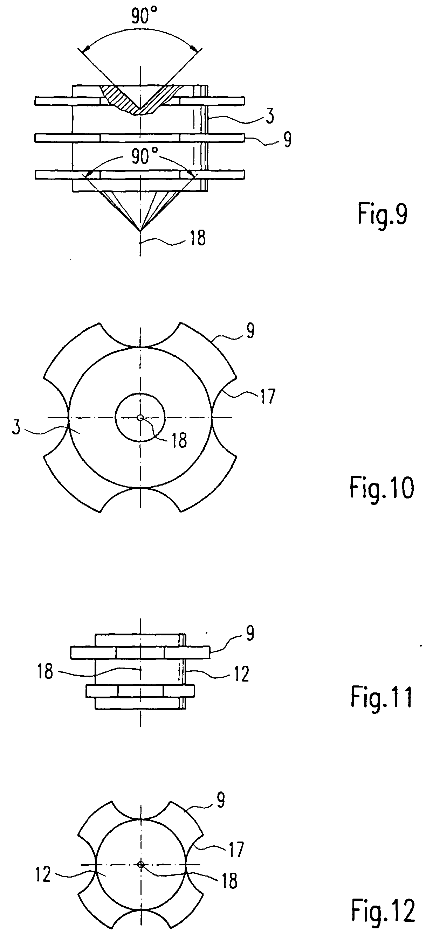

Fig. 9 ist eine Querschnittsansicht einer bevorzugten Ausführungsform der Pedalbefestigungseinrichtung 3 für die erfindungsgemäße Fahrradkurbel, welche sowohl bei der ersten als auch bei der zweiten Ausführungsform verwendet werden kann, und Fig. 10 ist eine entsprechende Draufsicht.

Die in Fig. 9 und 10 gezeigte Pedalbefestigungseinrichtung 3 ist analog wie die Tretlagerwellenbefestigungseinrichtung 2 nach Fig. 7 und 8 aufgebaut. Da sie geringere Kräfte aufnehmen muß, ist ihr Durchmesser geringer und weist sie weniger Lamellen 9 als die Tretlagerwellenbefestigungseinrichtung 2 auf.

Fig. 11 eine Querschnittsansicht einer bevorzugten Ausführungsform eines in den aus Hartschaummasse bestehenden Kern eingeschäumten Innengewindeeinsatzes als Teil der Zahnkranzbefestigungseinrichtung für die erfindungsgemäße Fahrradkurbel, welche bei der zweiten Ausführungsform verwendet werden kann, und Fig. 12 ist eine entsprechende Draufsicht.

Der in den Kern eingeschäumte, durch den faserverstärkten Kunststoffmantel zugängliche Innengewindeeinsatz aus Aluminium zur Befestigung des kleinen Zahnkranzes ist ebenfalls analog wie die Tretlagerwellenbefestigungseinrichtung 2 und die Pedalbefestigungseinrichtung 3 aufgebaut. Allerdings hat er einen noch geringeren Durchmesser und weist noch weniger Lamellen 9 als die Pedalbefestigungseinrichtung auf, denn mehrere solche Einsätze, z.B. fünf, wie in Fig. 5 dargestellt, sind vorgesehen, unter denen die Belastung aufgeteilt ist, so daß die Anforderungen an den einzelnen Einsatz verringert sind.

Im folgenden wird das kostengünstige Verfahren zur Herstellung der erfindungsgemäßen Fahrradkurbel näher beschrieben werden.

Zunächst werden eine oder mehrere mit unausgehärtetem Kunststoff getränkte Fasergewebelagen in eine vorzugsweise mit unausgehärtetem Kunststoff vorbelegte Form eingebracht, um einen teilweise offenen faserverstärkten Kunststoffmantel in der Form zu bilden. Der so gebildete Kunststoffmantel ist beispielsweise wannenförmig.

Die Einsätze der Pedalbefestigungseinrichtung, der Tretlagerwellenbefestigungseinrichtung und ggfs. der Zahnkranzbefestigungseinrichtung werden in den teilweise offenen faserverstärkten Kunststoffmantel eingebracht.

Falls zur Erhöhung der Steifigkeit erwünscht, kann weiterer unausgehärteter Kunststoff insbesondere im Bereich der Einsätze der Pedalbefestigungseinrichtung, der Tretlagerwellenbefestigungseinrichtung und ggfs. der Zahnkranzbefestigungseinrichtung in die Form eingebracht werden.

Anschließend findet ein Ausschäumen des faserverstärkten Kunststoffmantels mit der Hartschaummasse statt.

Dann wird der faserverstärkte Kunststoffmantel durch mindestens eine mit unausgehärtetem Kunststoff getränkten Fasergewebelagen geschlossen. Dies kann insbesondere so geschehen, daß das wannenförmige Teil an seinen Seitenwänden nach innen umgeklappt wird und auf den umgeklappten Bereich eine deckelförmige Gewebelage aus faserverstärktem Kunststoff auflaminiert wird, welche eine Überlappkante mit dem wannenförmigen Teil bildet.

Mit dem Aushärten des faserverstärkten Kunststoffs und des Hartschaums wird die erfindungsgemäße Fahrradkurbel schließlich fertiggestellt.

Diese Art der Herstellung mit der deckelförmigen Gewebelage bietet einerseits eine zusätzliche Erhöhung der Kantenfestigkeit und andererseits ein gutes optisches Aussehen.

Die Öffnungen im faserverstärkten Kunststoffmantel zum Zugänglichmachen der Tretlagerwellenbefestigungseinrichtung, Pedalbefestigungseinrichtung und ggfs. Zahnkranzbefestigungseinrichtung werden vorteilhafterweise nach dem Aushärten eingesenkt.

Wie beschrieben, liefert die vorliegende Erfindung einen wertvollen Beitrag zur Gewichtsreduzierung und Gestaltungsflexibilisierung von Fahrradkurbeln, ohne den Kostenaufwand dafür zu erhöhen.

## Patentansprüche

1. Fahrradkurbel (1, 11) mit:
einer Tretlagerwellenbefestigungseinrichtung (2);
einer Pedalbefestigungseinrichtung (3);
einem aus einer Hartschaummasse bestehenden Kern (6);
dadurch gekennzeichnet,
daß den Kern ein faserverstärkter Kunststoffmantel (1a, 1b; 11a, 11b) umgibt;
daß an dem einen Ende dieser Fahrradkurbel in dem Kern die Tretlagerwellenbefestigungseinrichtung (2) derart mit Hartschaummasse eingeschäumt ist, daß wenigstens eine Öffnung auf der Oberseite und/oder der Unterseite vorhanden ist, welche für eine Welle oder Achse zugänglich ist; und
daß an dem anderen Ende dieser Fahrradkurbel in dem Kern die Pedalbefestigungseinrichtung (3) derart mit Hartschaummasse eingeschäumt ist, daß wenigstens eine Öffnung auf der Oberseite und/oder der Unterseite vorhanden ist, welche für eine Welle oder Achse zugänglich ist.

2. Fahrrad kurbel nach Anspruch 1, gekennzeichnet durch wenigstens eine Zahnkranzbefestigungseinrichtung (12, 13) zum Anbringen von mindestens einem Zahnkranz.

3. Fahrradkurbel nach Anspruch 1, dadurch gekennzeichnet, daß die Zahnkranzbefestigungseinrichtung in den Kern (6) derart mit Hartschaummasse eingeschäumt ist, daß ein erster Teil (12) der Zahnkranzbefestigungseinrichtung durch wenigstens eine Öffnung auf der Oberseite und/oder Unterseite des faserverstärkten Kunststoffmantels zugänglich ist.

4. Fahrradkurbel nach Anspruch 2 oder 3, dadurch gekennzeichnet, daß die Zahnkranzbefestigungseinrichtung einen zweiten Teil mit ringförmigen Ansätzen (13) aufweist, die um das entsprechende Ende der Fahrradkurbel (11) herum angeordnet sind.

5. Fahrradkurbel nach Anspruch 4, dadurch gekennzeichnet, daß die ringförmigen Ansätze (13) aus Kunststoff bestehen und an den faserverstärkten Kunststoffmantel angeformt sind.

6. Fahrradkurbel nach einem der vorhergehenden Ansprüche , dadurch gekennzeichnet, daß die Tretlagerwellenbefestigungseinrichtung (2) und/oder die Pedalbefestigungseinrichtung (3) und/oder der in dem Kern der Fahrradkurbel angeordnete und mit Hartschaum eingeschäumte Teil der Zahnkranzbefestigungseinrichtung (12) einen im wesenlichen zylindrischen Einsatz aufweisen.

7. Fahrradkurbel nach Anspruch 6, dadurch gekennzeichnet, daß der im wesentlichen zylindrische Einsatz (2, 3) umfangsmäßig scheibenförmige Lamellen (9) aufweist.

8. Fahrradkurbel nach Anspruch 7, dadurch gekennzeichnet, daß die scheibenförmigen Lamellen (9) unterschiedliche Durchmesser aufweisen.

9. Fahrradkurbel nach Anspruch 7 oder 8, dadurch gekennzeichnet, daß die Zylinderbereiche (2, 3) zwischen den Lamellen unterschiedliche Durchmesser aufweisen.

10. Fahrradkurbel nach Anspruch 7, 8 oder 9, dadurch gekennzeichnet, daß die Lamellen (9) umfangsmäßig Aussparungen aufweisen.

11. Fahrradkurbel nach Anspruch 10, dadurch gekennzeichnet, daß Aussparungen (17) halbkreisförmige Aussparungen sind.

12. Fahrradkurbel nach Anspruch 11, dadurch gekennzeichnet, daß die halbkreisförmigen Aussparungen (17) den im wesentlichen zylindrischen Einsatz tangential berühren.

13. Fahrradkurbel nach einem der Ansprüche 10 bis 12, dadurch gekennzeichnet, daß vier Aussparungen (17) vorgesehen sind, die um 90° voneinander beabstandet sind.

14. Fahrradkurbel nach einem der vorhergehenden Ansprüche, dadurch gekennzeichnet, daß die Tretlagerwellenbefestigungseinrichtung (2) und/oder die Pedalbefestigungseinrichtung (3) und/oder die Zahnkranzbefestigungseinrichtung (12) aus Aluminium bestehen.

15. Fahrradkurbel nach einem der vorhergehenden Ansprüche, dadurch gekennzeichnet, daß die Hartschaummasse (6) aus Polyurethanschaum besteht.

16. Fahrradkurbel nach einem der vorhergehenden Ansprüche, dadurch gekennzeichnet, daß der faserverstärkte Kunststoffmantel (1a, 1b; 11a, 11b) aus kohlefaserverstärktem Phenolharz oder Epoxyharz besteht.

17. Fahrradkurbel nach einem der vorhergehenden Ansprüche, dadurch gekennzeichnet, daß eine oder mehrere Fasergewebelagen vorgesehen sind.

18. Fahrradkurbel nach einem der vorhergehenden Ansprüche, dadurch gekennzeichnet, daß der faserverstärkte Kunststoffmantel ein wannenförmiges Teil (1a; 11a) und ein damit verbundenes plattenförmiges Teil (1b; 11b) aufweist.

19. Fahrradkurbel nach Anspruch 18, dadurch gekennzeichnet, daß das wannenförmige Teil und das plattenförmige Teil eine Überlappkante (7) aufweisen.

20. Fahrradkurbel nach einem der vorhergehenden Ansprüche, dadurch gekennzeichnet, daß um die Tretlagerwellenbefestigungseinrichtung (2) und/oder die Pedalbefestigungseinrichtung (3) und/oder den in dem Kern der Fahrradkurbel angeordneten und mit Hartschaum eingeschäumten Teil der Zahnkranzbefestigungseinrichtung (12) herum zusätzlich Kunststoff eingebettet ist.

21. Fahrradkurbel nach einem der vorhergehenden Ansprüche, dadurch gekennzeichnet, daß die Pedalbefestigungseinrichtung (3) eine Innengewindeeinrichtung umfaßt.

22. Fahrradkurbel nach einem der Ansprüche 3 bis 21, dadurch gekennzeichnet, daß der ersteTeil der Zahnkranzbefestigungseinrichtung (12) eine Innengewindeeinrichtung umfaßt.

23. Fahrradkurbel nach einem der vorhergehenden Ansprüche, dadurch gekennzeichnet, daß die Tretlagerwellenbefestigungseinrichtung (2) eine Vierkantaufnahmeeinrichtung (4) umfaßt.

24. Fahrradkurbel nach einem der vorhergehenden Ansprüche, dadurch gekennzeichnet, daß der Kunststoff durchsichtig ist.

25. Verfahren zur Herstellung einer Fahrradkurbel, mit den Schritten:
i) Einbringen von mindestens einer mit unausgehärtetem Kunststoff getränkten Fasergewebelage in eine Form, um einen teilweise offenen faserverstärkten Kunststoffmantel zu bilden;
ii) Einlegen von zumindest einer Pedalbefestigungseinrichtung (3) und einer Tretlagerwellenbefestigungseinrichtung (2) in den teilweise offenen faserverstärkten Kunststoffmantel;
iii) Ausschäumen des faserverstärkten Kunststoffmantels mit Hartschaum, so daß die Pedalbefestigungseinrichtung (3) und die Tretlagerwellenbefestigungseinrichtung (2) mit Hartschaummasse derart eingeschäumt werden, daß jeweils wenigstens eine Öffnung auf der Oberseite und/oder der Unterseite vorhanden bleibt, welche für eine Welle oder Achse zugänglich ist.
iv) Verschließen des faserverstärkten Kunststoffmantels durch mindestens eine mit unausgehärtetem Kunststoff getränkte Fasergewebelage; und
v) Aushärten des faserverstärkten Kunststoffs und des Hartschaums.

26. Verfahren zur Herstellung einer Fahrradkurbel nach Anspruch 25, gekennzeichnet durch den Schritt des Einlegens einer Zahnkranzbefestigungseinrichtung (12) in den teilweise offenen faserverstärkten Kunststoffmantel.

27. Verfahren zur Herstellung einer Fahrradkurbel nach Anspruch 25 oder 26, gekennzeichnet durch den Schritt des Umklappens der Seitenwände des teilweise offenen faserverstärkten Kunststoffmantels und anschließendes Auflaminieren einer deckelförmigen faserverstärkten Gewebelage (1b; 11b) zum Verschließen des faserverstärkten Kunststoffrnantels.

28. Verfahren zur Herstellung einer Fahrradkurbel nach Anspruch 25, 26 oder 27, gekennzeichnet durch den Schritt des Einsenkens von Öffnungen in den faserverstärkten Kunststoffmantel nach dem Aushärten zum Zugänglichmachen der Tretlagerwellenbefestigungseinrichtung und/oder Pedalbefestigungseinrichtung und/oder Zahnkranzbefestigungseinrichtung.

29. Verfahren zur Herstellung einer Fahrradkurbel nach einem der Ansprüche 25 bis 28, gekennzeichnet durch den Schritt des Vorbelegens der Form mit unausgehärtetem Kunststoff.

30. Verfahren zur Herstellung einer Fahrradkurbel nach einem der Ansprüche 25 bis 29, gekennzeichnet durch den Schritt des Einbringens weiteren unausgehärteten Kunststoffs in den teilweise offenen faserverstärkten Kunststoffmantel, insbesondere im Bereich der der Pedalbefestigungseinrichtung und /oder aer Tretlagerwellenbefestigungseinrichtung und/oder der Zahnkranzbefestigungseinrichtung.

## Claims

1. Bicycle crank (1,11) with:
Bottom bracket baering fixing arrangement (2);
A pedal fixing arrangement (3);
A moulded body made from rigid foam compound (6);
characterised by the moulded body being clad in a fibre-reinforced plastics coating (1a, 1b; 11a, 11b);
that the bottom bracket bearing shaft fixing arrangement is surrounded with rigid foam compound at one end of this bicycle crank in the moulded body (2) to the extent that at least one aperture on the upper side and/or the lower side is available, which is accessible for a shaft or axle; and
that at the other end of this bicycle crank in the moulded body the pedal fixing arrangement (3) is surrounded with rigid foam compound to the extent that at least one aperture on the upper side and/or lower side is available, which is accessible for a shaft or axle.

2. Bicycle crank according to claim 1, characterised by at least one sprocket fixing arrangement (12,13) for attaching at least one sprocket.

3. Bicycle crank according to claim 1, characterised by the sprocket fixing arrangement in the moulded body (6) being surrounded with rigid foam compound to the extent that a first section (12) of the sprocket fixing arrangement is accessible through one aperture on the upper side and/or the lower side of the fibre-reinforced plastics coating.

4. Bicycle crank according to claims 2 or 3, characterised in that the sprocket fixing arrangement exhibits a second section with circular projections (13), which are arranged around the corresponding end of the bicycle crank (11).

5. Bicycle crank according to claim 4, characterised by the circular projections (13) which consist of plastics (material) and are moulded to the fibre-reinforced plastics coating

6. Bicycle crank according to the preceding claims, characterised in that the bottom bracket bearing shaft fixing arrangement (2) and/or the pedal fixing arrangement (3) and/or the section arranged in the moulded body of the bicycle crank and the section of the sprocket fixing arrangement surrounded with rigid foam (12) exhibits an insert which is essentially cylindrical.

7. Bicycle crank according to claim 6, characterised in that the essentially cylindrical insert (2,3) exhibits substantially disc-shaped blades (9)

8. Bicycle crank, characterised in that the disc-shaped blades (9) have various diameters.

9. Bicycle crank according to claim 7 or 8, characterised in that the cylinder regions (2,3) between the blades have various diameters.

10. Bicycle crank according to claim 7, 8 or 9, characterised in that the blades (9) exhibit extensive recesses.

11. Bicycle crank according to claim 10, characterised in that recesses (17) are semicircular recesses:

12. Bicycle crank according to claim 11, characterised in that the semicircular recesses (17) touch the essentially cylindrical insert tangentially.

13. Bicycle crank according to claims 10 to 12, characterised in that four recesses (17) are provided which are spaced 90° from one another.

14. Bicycle crank according to one of the preceding claims, characterised in that the bottom bracket bearing shaft fixing arrangement (2) and/or the pedal fixing arrangement (3) and/or the sprocket fixing arrangement (12) consist of aluminium.

15. Bicycle crank according to one of the preceding claims, characterised in that the rigid foam compound (6) consists of polyurethane foam.

16. Bicycle crank according to one of the preceding claims, characterised in that the fibre-reinforced plastics coating (1a,1b;11a,11b) consists of carbon fibre-reinforced phenolic resin (Phenoplast) or epoxy resin.

17. Bicycle crank according to one of the preceding claims, characterised in that one or more fibre woven fabric layers are provided.

18. Bicycle crank according to one of the preceding claims, characterised in that the fibre-reinforced plastics coating exhibits a dished section (1a;11a) and a plate-shaped section connected with it (1b;11b)

19. Bicycle crank according to claim 18, characterised in that the dished section and the plate-shaped section exhibit an overlapped edge (7)

20. Bicycle crank according to one of the preceding claims, characterised in that additional plastics material is embedded around the bottom bracket bearing shaft fixing arrangement (2) and/or the pedal fixing arrangement (3) and/or the section of the sprocket fixing arrangement arranged in the centre piece of the bicycle crank and surrounded with rigid foam (12).

21. Bicycle crank according to one of the preceding claims, characterised in that the pedal fixing arrangement (3) embraces an internal screw thread arrangement.

22. Bicycle crank according to claims 3 to 21, characterised in that the first section of the sprocket fixing arrangement (12) embraces an internal screw thread arrangement.

23. Bicycle crank according to one of the preceding claims, characterised in that the bottom bracket shaft fixing arrangement (2) embraces a square (head) retainer (4).

24. Bicycle crank according to one of the preceding claims, characterised in that the plastics (material) is transparent.

25. Process for manufacturing a bicycle crank with steps:
i) Accommodation of at least one fibre woven fabric layer impregnated with unhardened plastics in a mould to form a partly open fibre-reinforced plastics coating;
ii) Insertion of at least one pedal fixing arrangement (3) and one bottom bracket bearing shaft fixing arrangement (2) in the partly open fibre-reinforced plastics coating;
iii) Foaming out of the fibre-reinforced plastics coating with rigid foam, so that the pedal fixing arrangement (3) and the bottom bracket bearing shaft fixing arrangement (2) are surrounded with rigid foam compound, that at least one opening on the upper side and/or the lower side respectively remains available, which is accessible for a shaft or axle.
iv) Sealing of the fibre-reinforced plastics coating by at least one fibre woven fabric layer impregnated with unhardened plastics (material); and
v) Hardening of the fibre-reinforced plastics (material) and the rigid foam.

26. Process for manufacturing a bicycle crank according to claim 25, characterised by the step of inserting a sprocket fixing arrangement (12) into the partly open fibre-reinforced plastics coating.

27. Process for manufacturing a bicycle crank according to claim 25 or 26, characterised by the step of folding down the side walls of the partly open fibre-reinforced plastics coating and subsequent lamination of a cap-shaped fibre-reinforced woven fabric layer (1b;11b) for sealing the fibre-reinforced plastics coating.

28. Process for manufacturing a bicycle crank according to claims 25, 26 or 27, characterised by the step of counterboring of openings in the fibre-reinforced plastics coating after hardening (curing) to make the bottom bracket bearing shaft fixing arrangement and/or pedal fixing arrangement andlor sprocket fixing arrangement accessible.

29. Process for manufacturing a bicycle crank according to claims 25 to 28, characterised by the step of pre-filling the mould with unhardened (un-cured) plastics (material).

30. Process for manufacturing a bicycle crank according to claims 25 to 29, characterised by the step of accommodating further unhardened plastics (material) in the partly open fibre-reinforced plastics coating, in particular in the region of the pedal fixing arrangement and/or the bottom bracket bearing fixing arrangement and/or the sprocket fixing arrangement.

## Revendications

1. Manivelle (1,11) de bicyclette comprenant:
un dispositif (2) de fixation de l'arbre du pédalier;
un dispositif (3) de fixation de pédale;
un noyau (6) formé d'une masse de mousse dure;
caractérisée en ce
qu'une enveloppe (1a,1b;11a,11b) de matière plastique renforcée par des fibres entoure le noyau;
que sur une extrémité de cette manivelle de bicyclette, le dispositif (2) de fixation de l'arbre de pédalier est enrobé par une masse de mousse dure dans le noyau de telle sorte qu'il existe au moins une ouverture sur le côté supérieur et/ou sur le côté inférieur, qui est accessible pour un arbre ou un axe; et
que sur l'autre extrémité de cette manivelle de bicyclette, le dispositif (3) de fixation de la pédale est enrobé par une masse de mousse dure dans le noyau, de telle sorte qu'il existe au moins une ouverture sur le côté supérieur et/ou sur le côté inférieur, qui est accessible pour un arbre ou un axe.

2. Manivelle de bicyclette selon la revendication 1, caractérisée par au moins un dispositif (12,13) de fixation d'une couronne dentée, pour le montage d'au moins une couronne dentée.

3. Manivelle de bicyclette selon la revendication 1, caractérisée en ce que le dispositif de fixation de la couronne dentée dans le noyau (6) est enrobé par une masse de mousse dure de telle sorte qu'une première partie (12) du dispositif de fixation de la couronne dentée est accessible par au moins une ouverture située sur le côté supérieur et/ou sur le côté inférieur de l'enveloppe en matière plastique renforcée par des fibres.

4. Manivelle de bicyclette selon la revendication 2 ou 3, caractérisée en ce que le dispositif de fixation de la couronne dentée comporte une seconde partie pourvue d'appendices saillants de forme annulaire (13), qui sont disposés autour de l'extrémité correspondante de la manivelle de bicyclette (11).

5. Manivelle de bicyclette selon la revendication 4, caractérisée en ce que les appendices saillants de forme annulaire (13) sont réalisés en matière plastique et sont formés sur l'enveloppe de matière plastique renforcée par des fibres.

6. Manivelle de bicyclette selon l'une des revendications précédentes, caractérisée en ce que le dispositif (2) de fixation de l'arbre de pédalier et/ou le dispositif (3) de fixation de la pédale et/ou la partie, qui est disposée dans le noyau de la manivelle de bicyclette et est enrobée par une mousse dure, possèdent un insert essentiellement cylindrique.

7. Manivelle de bicyclette selon la revendication 6, caractérisée en ce que l'insert essentiellement cylindrique (2,3) comporte, sur sa périphérie, des lamelles en forme de disques (9).

8. Manivelle de bicyclette selon la revendication 7, caractérisée en ce que les lamelles en forme de disques (9) possèdent des diamètres différents.

9. Manivelle de bicyclette selon la revendication 7 ou 8, caractérisée en ce que les parties cylindriques (2,3) entre les lamelles possèdent des diamètres différents.

10. Manivelle de bicyclette selon la revendication 7,8 ou 9, caractérisée en ce que les lamelles (9) possèdent des évidements sur leur périphérie.

11. Manivelle de bicyclette selon la revendication 10, caractérisée en ce que des évidements (17) sont des évidements de forme semi-circulaire.

12. Manivelle de bicyclette selon la revendication 11, caractérisée en ce que les évidements de forme semi-circulaires (17) touchent tangentiellement l'insert essentiellement cylindrique.

13. Manivelle de bicyclette selon l'une des revendications 10 à 12, caractérisée en ce que quatre évidements (17) distants les uns des autres de 90° sont prévus.

14. Manivelle de bicyclette selon l'une des revendications précédentes, caractérisée en ce que le dispositif (2) de fixation de l'arbre de pédalier et/ou le dispositif (3) de fixation de la pédale et/ou le dispositif (12) de fixation de la couronne dentée sont réalisés en aluminium.

15. Manivelle de bicyclette selon l'une des revendications précédentes, caractérisée en ce que la masse de matériau mousse (6) est constituée par une mousse de polyuréthane.

16. Manivelle de bicyclette selon l'une des revendications précédentes, caractérisée en ce que l'enveloppe (1a,1b;11a,11b) en matière plastique renforcée par des fibres est constituée par une résine phénolique ou une résine époxy, renforcée par des fibres de carbone.

17. Manivelle de bicyclette selon l'une des revendications précédentes, caractérisée en ce qu'il est prévu une ou plusieurs couches de tissu fibreux.

18. Manivelle de bicyclette selon l'une des revendications précédentes, caractérisée en ce que l'enveloppe de matière plastique renforcée par des fibres comporte une partie en forme de cuvette (1a;11a) et une partie en forme de plaque (1b;11b) reliée à l'autre partie.

19. Manivelle de bicyclette selon la revendication 18, caractérisée en ce que la partie en forme de cuvette et la partie en forme de plaque possèdent un bord de chevauchement (7).

20. Manivelle de bicyclette selon l'une des revendications précédentes, caractérisée en ce qu'une matière plastique est en outre appliquée autour du dispositif (2) de fixation de l'arbre du pédalier et/ou autour du dispositif (3) de fixation de la pédale et/ou autour de la partie du dispositif (12) de fixation de la couronne dentée, qui est disposée dans le noyau de la manivelle de bicyclette et est enrobée par de la mousse dure.

21. Manivelle de bicyclette selon l'une des revendications précédentes, caractérisée en ce que le dispositif (2) de fixation de la pédale comprend un dispositif à taraudage.

22. Manivelle de bicyclette selon l'une des revendications 3 à 21, caractérisée en ce que la première partie du dispositif (12) de fixation de la couronne dentée comprend un dispositif à taraudage.

23. Manivelle de bicyclette selon l'une des revendications précédentes, caractérisée en ce que le dispositif (2) de fixation de l'arbre de pédalier comprend un dispositif de réception de section carrée (4).

24. Manivelle de bicyclette selon l'une des revendications précédentes, caractérisée en ce que la matière plastique est transparente.

25. Procédé pour fabriquer une manivelle de bicyclette, comprenant les étapes consistant à:
i) introduire au moins une couche de tissu fibreux imprégné par une matière plastique non durcie, dans un moule pour former une enveloppe de matière plastique renforcée par des fibres, partiellement ouverte;
ii) insérer au moins un dispositif (3) de fixation de la pédale et un dispositif (2) de fixation de l'arbre de pédalier dans l'enveloppe en matière plastique renforcée par des fibres, partiellement ouverte;
iii) envelopper par moussage l'enveloppe de matière plastique renforcée par des fibres avec une mousse dure de sorte que le dispositif (3) de fixation de la pédale et le dispositif (2) de fixation de l'arbre de pédalier sont enrobés par une masse de mousse dure de telle sorte qu'il subsiste sur le côté supérieur et/ou sur le côté inférieur respectivement au moins une ouverture qui est accessible pour un arbre ou un axe;
iv) fermer l'enveloppe en matière plastique renforcée par des fibres, par au moins une couche de tissu fibreux imprégnée par une matière plastique non durcie; et
v) faire durcir la matière plastique renforcée par des fibres et la mousse dure.

26. Procédé pour fabriquer une manivelle de bicyclette selon la revendication 25, caractérisé par l'étape consistant à insérer un dispositif (12) de fixation d'une couronne dentée dans l'enveloppe en matière plastique renforcée par des fibres, partiellement ouverte.

27. Procédé pour fabriquer une manivelle de bicyclette selon la revendication 25 ou 26, caractérisé par l'étape consistant à rabattre les parois latérales de l'enveloppe en matière plastique renforcée par des fibres partiellement ouverte et par l'application ultérieure d'une couche (1b;11b) de tissu renforcé par des fibres, formant couvercle, pour fermer l'enveloppe en matière plastique renforcée par des fibres.

28. Procédé pour fabriquer une manivelle de bicyclette selon la revendication 25,26 ou 27, caractérisé par l'étape consistant à creuser des ouvertures dans l'enveloppe de matière plastique renforcée par des fibres après le durcissement de manière à rendre accessible le dispositif de fixation de l'arbre de pédalier et/ou le dispositif de fixation de pédale et/ou le dispositif de fixation de la couronne dentée.

29. Procédé pour fabriquer une manivelle de pédalier selon l'une des revendications 25 à 28, caractérisé par l'étape consistant à recouvrir préalablement le moule avec une matière plastique non durcie.

30. Procédé pour fabriquer une manivelle de bicyclette selon l'une des revendications 25 à 29, caractérisé par l'étape consistant à introduire une autre matière plastique non durcie dans l'enveloppe en matière plastique renforcée par des fibres, partiellement ouverte, notamment au niveau du dispositif de fixation de la pédale et/ou au niveau du dispositif de fixation de l'arbre de pédalier et/ou au niveau du dispositif de fixation de la couronne dentée.
